# FASCICULE DE BREVET EUROPEEN

(11) **EP 1 211 430 B1**
(45) Date de publication et mention de la délivrance du brevet: **21.03.2007**
(21) Numéro de dépôt: 01402908.6
(22) Date de dépôt: 13.11.2001
(51) Int. Cl.: F16B 13/04, F16B 13/06, F16B 13/12, F16B 13/08

(54) **Cheville à douille expansible avec une portion compressible**
Spreizdübel mit einer komprimierbaren Zone
Expansion dowel with a compressible portion

(30) Priorité: 29.11.2000 FR 0015408
(43) Date de publication de la demande: 05.06.2002
(73) Titulaire: SOCIETE DE PROSPECTION ET D'INVENTIONS TECHNIQUES SPIT, 26501 Bourg-Les-Valence Cédex (FR)
(72) Inventeur: Pourtier, Fabrice, 26800 Portes Les Valence (FR)
(74) Mandataire: Bloch, Gérard

(56) Documents cités:
- WO-A-92/04547
- WO-A-96/25601
- DE-U- 7 625 795
- US-A- 4 312 611

## Description

La présente demande concerne une cheville à douille expansible disposée autour d'une tige filetée engagée dans un noyau d'expansion de la douille, la douille comportant une portion axialement compressible, ou collapsible.

On connaît de telles chevilles, notamment par les documents WO 96/25601, WO 92/04547, DE 3023411 et GB-A-2016106.

Lorsqu'on veut fixer une pièce à un support, par exemple un support de maçonnerie, on peut utiliser de telles chevilles à douille expansible qu'on fixe dans des trous d'ancrage forés dans le support. Il peut arriver que la pièce à fixer soit, en un endroit, décollée du support. En utilisant une cheville à douille comprenant une portion compressible, on arrive souvent, lors de l'ancrage de la cheville, à plaquer la pièce contre le support grâce à la compression de la portion de douille compressible. Mais parfois, le raccourcissement axial de la portion de douille compressible n'est pas suffisant avant que la cheville ne soit parfaitement ancrée dans son trou d'ancrage, pour assurer le placage de la pièce.

L'invention de la présente demande vise à s'affranchir d'un tel risque.

A cet effet, la présente demande concerne une cheville à douille expansible telle que décrite dans la première revendication.

Ainsi, sous l'action de la force exercée axialement par le noyau sur la douille, lors de son expansion, le cisaillement de la douille et son raccourcissement de cisaillement, d'une part, et sa compression et son raccourcissement de compression, d'autre part, se complètent utilement pour assurer un raccourcissement axial global suffisant pour plaquer la pièce à fixer avant l'ancrage de la cheville.

De préférence, les moyens cisaillables sont agencés pour être cisaillés avant la compression des moyens compressibles.

Les moyens cisaillables comportent des ponts cisaillables reliant deux portions de douille agencées pour s'emboîter axialement l'une dans l'autre, chaque pont étant de préférence incliné sur un plan axial.

De préférence encore, les portions de douille d'emboîtement sont compressibles.

Dans la forme de réalisation préférée de la cheville de l'invention, la douille est constituée d'un flan de tôle découpé et roulé sur lui-même.

L'invention sera mieux comprise à l'aide de la description suivante de la forme de réalisation préférée de la cheville de l'invention, en référence au dessin annexé, sur lequel :
- la figure 1 représente une vue du flan de tôle avant d'être roulé sur lui-même pour former la douille expansible de l'invention ;
- la figure 2 représente une vue en perspective de la douille expansible obtenue à partir du flan de la figure 1 ;
- la figure 3 représente une vue en perspective de la cheville de l'invention ;
- la figure 4 représente une vue en coupe axiale de la cheville en position dans un trou d'ancrage avant fixation d'une pièce et
- la figure 5 représente une vue en coupe axiale de la cheville après fixation de la pièce.

La cheville représentée sur le dessin comporte un ensemble fileté 1, d'axe 20, une douille expansible 2 et un noyau conique d'expansion 3. L'ensemble fileté 1 comporte une tige filetée, ou vis, 9 proprement dite et une entretoise tubulaire 8. La tige filetée 9 comporte une extrémité filetée 4 et une extrémité de tête 6, de type écrou. Une rondelle d'appui 7 est disposée entre la tête de vis 6 et l'entretoise 8.

L'entretoise 8 est d'un diamètre sensiblement égal à celui d'un trou d'ancrage dans lequel la cheville sera ancrée.

La douille expansible 2, de même diamètre extérieur que l'entretoise tubulaire 8, est disposée autour de la portion de tige 9 entre l'entretoise 8 et le noyau d'expansion 3, contre le bord annulaire 10 de l'entretoise 8 opposé à la tête de vis 6. Le noyau 3 est taraudé intérieurement et l'extrémité filetée 4 de la tige 9 y est engagée. La grande base 11 du noyau 3, tournée vers l'extrémité libre de la tige 1, a un diamètre sensiblement égal au diamètre extérieur de l'entretoise 8. La petite base 12 du noyau 3, tournée vers la tête 6 de la tige 1, a un diamètre légèrement plus petit que le diamètre intérieur de la douille expansible 2, pour y être engagée et provoquer l'expansion de la douille.

La douille expansible est constituée ici par un flan de tôle 13 découpé et roulé sur lui-même autour d'un axe qui sera naturellement confondu avec l'axe 20 de la cheville.

Le flan 13 comporte deux zones de découpes, la première 14, à partir d'un bord 15 qui servira de bord d'introduction du cône d'expansion 3, la seconde 16, près de l'autre bord 17 qui viendra en appui contre le bord annulaire 10 de l'entretoise 8.

Les découpes 18 de la première zone 14, qui deviendra la zone d'expansion de la douille, sont conformées pour dégager des jambes d'expansion 19. Les découpes 18 sont des ouvertures à bords longitudinaux, qui deviendront parallèles à l'axe 20, s'évasant légèrement en 22 près du bord 15 pour favoriser la pénétration ultérieure du noyau d'expansion 3 et elles se terminent, du côté opposé au bord 15, par des oeillets 21, ici légèrement oblongs, qui éviteront, lors de l'expansion, toute déchirure de la douille.

Les découpes 23 de la deuxième zone 16 sont ici conformées en double marche d'escalier pour que cette zone devienne une portion de douille axialement compressible avec en outre des ponts cisaillables 24 reliant deux portions 25, 26 de cette portion de douille pouvant, après cisaillement, s'emboîter axialement l'une dans l'autre.

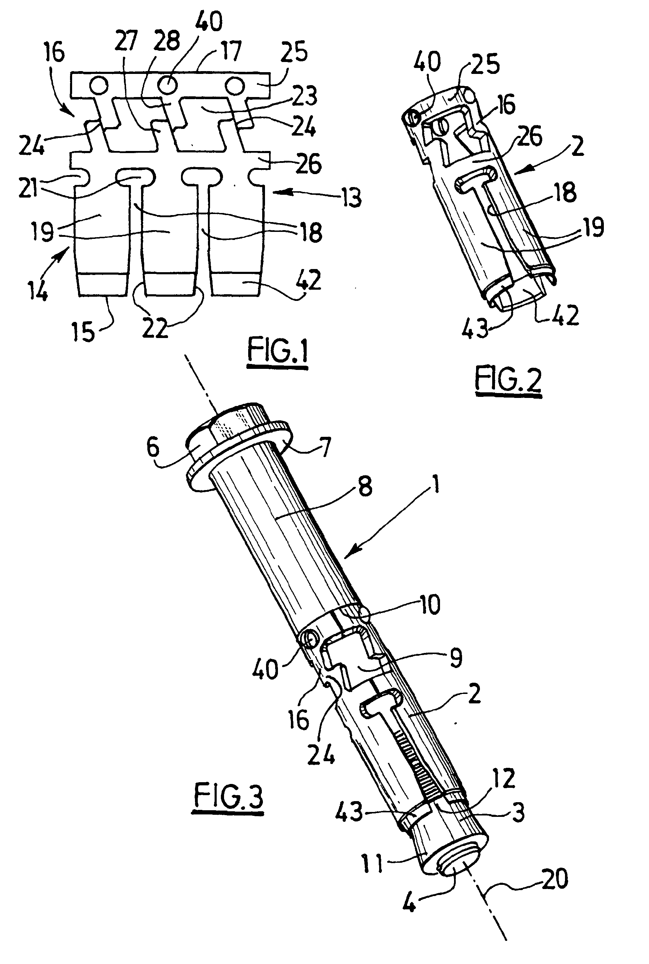

Plus précisément, chaque portion d'emboîtement comporte un peigne 25, 26 de dents compressibles 27 ; 28 à bords parallèles et inclinés sur un plan perpendiculaire aux bords 15, 17 et accolées deux à deux, tête-bêche, le long d'un pont de rupture cisaillable 24, de très faible largeur, représenté en pointillés sur la figure 1. Après avoir roulé le flan, les dents 27, 28 sont donc inclinées sur un plan axial de la cheville. Sous l'action d'une force de compression qui, lors de l'expansion de la douille par le noyau, s'applique perpendiculairement aux bords 15, 16, il se produit un cisaillement des ponts 24 avant que les dents 27, 28 des deux peignes 25, 26 ne glissent les unes sur les autres et que les peignes 25, 26 ne s'emboîtent l'un dans l'autre pour raccourcir axialement la douille.

Après un emboîtement des peignes, leurs dents 27, 28 peuvent être comprimées pour entraîner, au-delà du raccourcissement de cisaillement, un autre raccourcissement de compression de la douille 2.

On notera que par estampage, on a créé, le long du peigne 25 destiné à venir en appui contre l'épaulement 10 de la tige 9, des bossages anti-rotation 40. En outre, on a réduit intérieurement l'épaisseur du flan, progressivement depuis le bord 15 et sur une petite portion 42 pour, après avoir roulé le flan, obtenir une ouverture conique de la douille épousant le noyau conique 3. De même, pour faciliter l'expansion, si le matériau support est très dur, on a encore réduit mais extérieurement, l'épaisseur du flan, en créant un épaulement externe à proximité du bord 15, pour qu'à ce niveau 43, la douille puisse être légèrement repliée vers la paroi du trou dans le matériau support et que le noyau puisse passer sans que la douille ne se plante dans le noyau d'expansion.

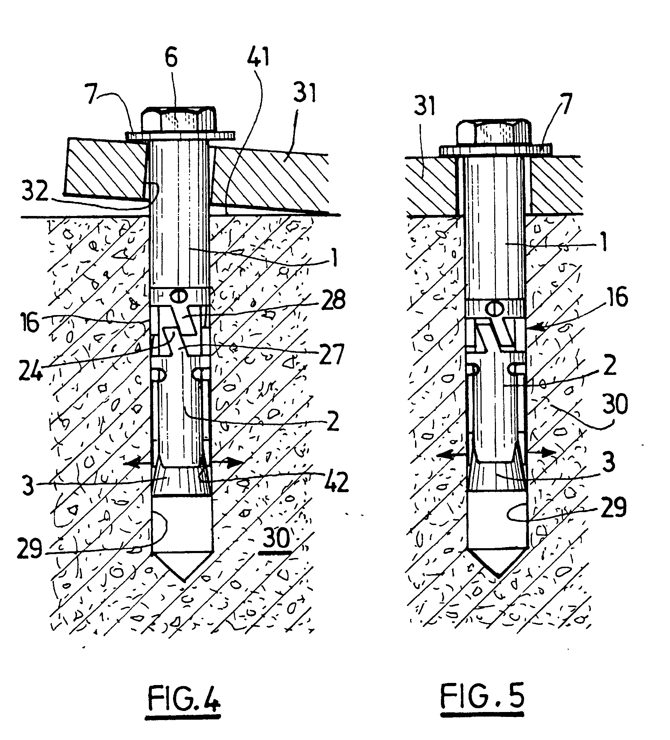

Ayant décrit les trois éléments de la cheville de l'invention, abordons maintenant son fonctionnement. Ces trois éléments étant associés dans leurs positions relatives de la figure 3, un trou d'ancrage 29 ayant été préalablement foré dans un matériau support 30, auquel doit être fixé une pièce 31, dans laquelle a aussi été percé un trou 32 de passage de la cheville, on passe la cheville à travers le trou 32 de la pièce et on l'introduit dans le trou d'ancrage 29 jusqu'à ce que la rondelle 7 vienne buter contre la pièce 31, qui n'est pas plaquée contre le support 30 (figure 4). On commence, par l'écrou 6, à visser dans le noyau 3 la tige 9, traversant l'entretoise 8 et la douille 2, immobilisée en rotation dans le trou 29 grâce à ses bossages anti-rotation 40, ce qui commence à faire monter le noyau 3 dans la douille 2 et provoquer un début d'expansion de la douille, son ancrage et celui du noyau 3.

En poursuivant le vissage de la tige 9 dans le noyau 3, ancré dans le trou 29, on provoque le cisaillement de ponts 24 de la portion compressible 16 de la douille 2, le raccourcissement, de cisaillement, de la portion de douille 16, la descente de la tige 9, et donc de l'ensemble fileté 1, dans le trou d'ancrage 29 et, ainsi, le placage de la pièce 31 contre la surface libre 41 du matériau support 30 (figure 5). On remarquera que dans l'exemple illustré, la pièce 31 à fixer a été plaquée contre le matériau support 30 à la suite du raccourcissement de cisaillement de la douille. En cas de nécessité, la compression des dents 27, 28, sous la poursuite de l'action de vissage de la tige, aurait pu permettre un raccourcissement supplémentaire de la douille. Après placage de la rondelle 7 contre la pièce 31 et de la pièce 31 contre le matériau support 30, la poursuite du vissage de la tige 9 dans le noyau d'expansion 3 provoque, non plus la descente de la tige 9 dans le trou d'ancrage 29, mais la remontée du noyau 3 dans le trou 29, la poursuite de l'expansion de la douille 2 et, finalement, l'ancrage de la cheville et la fixation de la pièce 31 au support 30.

## Revendications

1. - Cheville à douille expansible (2) disposée autour d'une tige filetée (9) engagée dans un noyau (3) d'expansion de la douille (2), la douille (2) comportant une portion axialement compressible (16), ladite portion de douille compressible (16) comporte des moyens cisaillables (24), agencées pour, après cisaillement, autoriser un raccourcissement axial de la douille (2), les moyens cisaillables comportant des ponts cisaillables (24) reliant deux portions de douille (25, 26) agencées pour s'emboîter axialement l'une dans l'autre **caractérisée par le fait que** les portions de douille comprenant, chacune, un peigne (25 ; 26) de dents compressibles (27; 28) accolées deux à deux, tête-bêche, le long d'un pont cisaillable (24).

2. - Cheville selon la revendication 1, dans laquelle les moyens cisaillables (24) sont agencés pour être cisaillés avant la compression des moyens compressibles (16).

3. - Cheville selon la revendication 3, dans laquelle chaque pont cisaillable (24) est incliné sur un plan axial.

4. - Cheville selon l'une des revendications 1 à 3, dans laquelle les portions de douille d'emboîtement (25, 26) sont compressibles.

5. - Cheville selon l'une des revendications 1 à 4, dans laquelle les dents (27 ; 28) des peignes (25 ; 26) sont inclinés sur un plan axial de la cheville.

6. - Cheville selon l'une des revendications 1 à 5, dans laquelle la douille (2) est constituée d'un flan de tôle découpé (14, 18 ; 16, 23) et roulé sur lui-même.

## Claims

1. Anchor having an expanding sleeve (2) arranged around a threaded shank (9) engaged in a plug (3) for expanding the sleeve (2), the sleeve (2) having an axially compressible portion (16), the said compressible sleeve portion (16) comprising means (24) that can be sheared and which are arranged so that after they have been sheared they allow the sleeve (2) to be shortened axially, the means that can be sheared comprising bridges (24) that can be sheared and that connect two sleeve portions (25, 26) that are designed to nest together axially, the anchor being **characterized in that** the sleeve portions each comprise a comb (25; 26) of compressible teeth (27; 28) butting together in pairs, top-to-toe, along a bridge (24) that can be sheared.

2. Anchor according to Claim 1, in which the means (24) that can be sheared are designed to be sheared before the compressible means (16) are compressed.

3. Anchor according to Claim 3, in which each bridge (24) that can be sheared is inclined to an axial plane.

4. Anchor according to one of Claims 1 to 3, in which the nesting sleeve portions (25, 26) are compressible.

5. Anchor according to one of Claims 1 to 4, in which the teeth (27; 28) of the combs (25; 26) are inclined to an axial plane of the anchor.

6. Anchor according to one of Claims 1 to 5, in which the sleeve (2) consists of a cut-out sheet-metal blank (14, 18; 16, 23) rolled up on itself.

## Patentansprüche

1. Dübel mit aufspreizbarer Hülse (2), die um eine Gewindestange (9) angeordnet ist, die in einem Aufspreizkern (3) der Hülse (2) in Eingriff steht, wobei die Hülse (2) eine axial komprimierbare Zone (16) aufweist, die abscherbare Mittel (24) aufweist, die so angeordnet sind, dass sie nach dem Abscheren eine axiale Verkürzung der Hülse (2) gestatten, und abscherbare Brücken (24) aufweisen, die zwei Hülsenzonen (25, 26) verbinden, die so angeordnet sind, dass sie sich axial ineinanderschieben, **dadurch gekennzeichnet, dass** die Hülsenzonen jeweils einen Kamm (25; 26) aus komprimierbaren Zinken (27; 28) aufweisen, die paarweise Kopf bei Fuß entlang einer abscherbaren Brücke (24) aneinandergefügt sind.

2. Dübel nach Anspruch 1, bei dem die abscherbaren Mittel (24) so angeordnet sind, dass sie vor der Komprimierung der komprimierbaren Mittel (16) abgeschert werden.

3. Dübel nach Anspruch 3, bei dem jede abscherbare Brücke (24) auf einer axialen Ebene geneigt ist.

4. Dübel nach einem der Ansprüche 1 bis 3, bei dem die Einschubhülsenzonen (25, 26) komprimierbar sind.

5. Dübel nach einem der Ansprüche 1 bis 4, bei dem die Zinken (27; 28) der Kämme (25; 26) auf einer axialen Ebene des Dübels geneigt sind.

6. Dübel nach einem der Ansprüche 1 bis 5, bei dem die Hülse (2) aus einer ausgeschnittenen und aufgerollten Blechplatine (14, 18; 16, 23) besteht.
